Europäisches Patentamt

European Patent Office

Office européen des brevets

(19)

(11) Veröffentlichungsnummer: **0 182 094**
**B1**

(12) **EUROPÄISCHE PATENTSCHRIFT**

(45) Veröffentlichungstag der Patentschrift: 22.08.90

(51) Int. Cl.⁵: **B 29 C 49/22**, B 65 D 83/00

(21) Anmeldenummer: 85113071.6

(22) Anmeldetag: 15.10.85

(54) **Verfahren zum Herstellen einer mit einer verschliessbaren Öffnung versehenen Verpackung und nach diesem Verfahren hergestellte Verpackung.**

(30) Priorität: 17.11.84 DE 3442092

(43) Veröffentlichungstag der Anmeldung:
28.05.86 Patentblatt 86/22

(45) Bekanntmachung des Hinweises auf die Patenterteilung:
22.08.90 Patentblatt 90/34

(84) Benannte Vertragsstaaten:
AT BE CH DE FR GB IT LI LU NL SE

(56) Entgegenhaltungen:
EP-A-0 036 967
WO-A-82/00780
GB-A-1 455 453
US-A-3 118 572
US-A-3 940 001
US-A-4 008 830

(73) Patentinhaber: Kautex-Werke Reinold Hagen Aktiengesellschaft
D-5300 Bonn-Holzlar 1 (DE)

(72) Erfinder: Thomas, Alfred
Wiesenweg 4
D-5201 Dambroich (DE)

(74) Vertreter: Koepsell, Helmut, Dipl.-Ing.
Mittelstrasse 7
D-5000 Köln 1 (DE)

## Beschreibung

Die Erfindung betrifft ein Verfahren zum Herstellen einer mit einer verschließbaren Öffnung versehenen Verpackung, die mit einem im wesentlichen formsteifen Außenbehälter versehen ist, innerhalb dessen ein das Füllgut aufnehmender Behälter aus flexiblem Material angeordnet ist, wobei im Koextrusionsverfahren zunächst ein aus zwei im wesentlichen koaxialen schlauchförmigen Abschnitten bestehender Vorformling extrudiert wird und die gleichzeitig extrudierten Abschnitte aus unterschiedlichen, miteinander keine Verbindung eingehenden thermoplastischen Kunststoffen bestehen und nach Erreichen der erforderlichen Länge in einer Blasform unter Anwendung von innerem Überdruck bis zur Anlage des äußeren Abschnittes an der Wandung der Blasform aufgeweitet werden und der Boden der Verpackung unter Abquetschen von Überschußmaterial bei gleichzeitiger Bildung einer Schweißnaht am Innenbehälter gebildet wird.

Es sind Verpackungen bekannt, die so ausgebildet sind, daß der Außenbehälter von einem Karton gebildet wird, innerhalb dessen der innere Behälter angeordnet ist. Dabei kann der statische Druck des Füllgutes ausgenutzt werden, um den inneren Beutel zu entleeren. Dies setzt voraus, daß die Entleerungsöffnung sich im unteren Bereich der Verpackung befindet. Ferner sind Verpackungen für Füllgüter bekannt, die in Form eines Aerosols von der Verpackung abgegeben werden. Dabei befindet sich das eigentliche Füllgut innerhalb eines Beutels, der innerhalb eines im allgemeinen metallischen Außenbehälters angeordnet ist. Im Bereich zwischen Beutel und metallischem Behälter befindet sich ein Druckmittel, unter dessen Einwirkung der Beutel zusammengedrückt und so entleert wird.

Diesen Verpackungen und auch solchen, wie sie z.B. in den DE-A-2,915,228, 3,045,710 und 3,240,300 beschrieben sind, ist eine Herstellungsweise eigen, die dadurch gekennzeichnet ist, daß Außenbehälter und Innenbehälter voneinander getrennt hergestellt und dann zusammengefügt werden. Die Herstellung derartiger Verpackungen in einem Arbeitsgang ist nicht möglich. Demzufolge sind kleinvolumige Verpackungen, wie sie beispielsweise für Aerosol verwendet werden, verhältnismäßig teuer.

Ferner ist aus der US-A-3,940,001 ein Behälter aus thermoplastischem Material bekannt, der aus mehreren Schichten besteht, von denen eine dem Körper die erforderliche Steifigkeit und Schlagfestigkeit vermittelt, wohingegen eine weitere Schicht, die aus einem anderen Material besteht, beispielsweise als Diffusionssperre wirkt. Die Lehre dieses Dokuments basiert auf der Überlegung, daß derartige, beispielsweise im Koextrusions-Blasverfahren hergestellte Behälter kaum wiederverwertbar seien, da die zu ihrer Herstellung verwendeten unterschiedlichen Materialien bei der Rückführung zur Wiederverwertung als Gemisch vorliegen, welches als solches nicht verarbeitbar ist. Aus diesem Grunde liegt der Lehre gemäß US-A-3,940,001 die Aufgabe zugrunde, einen derartigen Behälter so auszugestalten, daß die ihn bildenden einzelnen Materialarten zur Wiederverwertung voneinander getrennt gewonnen werden können. Dies soll dadurch erreicht werden, daß die äußere Schicht, welche die mechanische Festigkeit und Eigensteifigkeit der Verpackung bewirkt, aus einem spröden, nichtelastischen Material besteht, wohingegen die innere Schicht aus einem elastischen Material besteht. Zur Trennung der beiden Materialkomponenten sollen die verbrauchten Behälter einer mechanischen Beanspruchung, beispielsweise in einer Zerkleinerungsvorrichtung, unterzogen werden mit dem Ergebnis, daß die äußere, spröde Schicht zersplittert, also in kleinere Einzelteile zerlegt wird, und sich dabei von der inneren Schicht löst, die aufgrund der Elastizität des Kunststoffes, aus welchem sie besteht, im wesentlichen ihren Zusammenhang beibehält. Voraussetzung soll dabei sein, daß wenig oder keine Adhäsion zwischen den Schichten des laminierten Behälters besteht. Die durch diese Veröffentlichung vermittelte Lehre dient somit nicht dazu, die Verpackung für irgendwelche Verpackungszwecke geeignet zu machen oder sie in besonders wirtschaftlicher Weise herzustellen. Vielmehr ist die Zielsetzung der durch die Veröffentlichung vermittelten Lehre ausschließlich auf die Verarbeitung des Behälters nach dessen Verwendung gerichtet. Insbesondere enthält die Veröffentlichung keinen Hinweis darauf, daß die innere Schicht den eigentlichen Behälter darstellt, der sich im Zuge der Entleerung, also bei der Benutzung des Behälters, von der äußeren Schicht abhebt.

US-A-4,008,830 offenbart eine Verpackung, die aus einem im wesentlichen formsteifen Außenbehälter und einem flexiblen, das Füllgut aufnehmenden Innenbehälter besteht, der mittels eines durch eine Pumpe erzeugten Druckgefälles entleert wird. Der Boden des Außenbehälters ist mit einer Öffnung vesehen, durch die der Druck der umgebenden Atmosphäre permanent auf den Innenbehälter zur Einwirkung kommt. Bezüglich der Herstellung einer solchen Verpackung sind zwei Möglichkeiten offenbart. Einmal werden Außenbehälter und Innenbehälter getrennt voneinander hergestellt und durch ein Deckelteil, welches auch die Pumpe enthält, unter Anwendung eines Klemmsitzes miteinander verbunden. Diese Art der Herstellung ist außerordentlich kompliziert und aufwendig. Dies gilt auch für die zweite in der Veröffentlichung offenbarte Herstellungsweise, bei welcher Außenbehälter und Innenbehälter in einem gemeinsamen Arbeitsgang einstückig hergestellt werden. Wie dies im einzelnen geschehen soll, bleibt in der Veröffentlichung unerörtert. Jedoch sind auch hierbei mehrere Arbeitsgänge erforderlich, wobei zusätzlich noch das Problem auftritt, daß der den Außenbehälter bildende Teil des Formkörpers eine wesentlich größere Wandstärke aufweisen muß als der Teil, aus welchem der Innenbehälter gebildet wird.

Die US-A-3.118.572 offenbart ebenfalls eine Verpackung aus thermoplastischem Kunststoff, die einen Außenbehälter und einen verformbaren, das Füllgut aufnehmenden Innenbehälter aufweist. Diese Verpackung ist jedoch als Quetschflasche ausgebildet mit der Folge, daß die im Außenbehälter angeordnete Öffnung für die Herstellung einer Verbindung zur umgebenden Atmosphäre mit einem Einwegventil versehen ist, durch welches Luft nur von Außen in den Zwischenraum zwischen Innenbehälter und Außenbehälter einströmen kann. Diese bekannte Verpackung weist einen komplizierten Aufbau auf, so daß ihre Herstellung aufwendig ist. So wird der Innenbehälter an seinem der Abgabeöffnung abgekehrten Ende dadurch verschlossen, daß er mit dem Boden des Außenbehälters verbunden wird. Dies hat neben anderen Schwierigkeiten den Nachteil zur Folge, daß der Innenbehälter nicht vollständig entleert werden kann, da er mit dem Außenbehälter an dessen Boden verbunden bleibt. Bei einer anderen Ausführungsform ist der Innenbehälter an seinem der Abgabeöffnung abgekehrten Ende durch eine besondere Membran verschlossen, so daß die Verbindung mit dem Außenbehälter nicht erforderlich ist. Jedoch stellt das Anbringen der Membran eine zusätzliche Komplizierung und Verteuerung der Verpackung dar, die ohnehin durch die getrennte Herstellung von Außenbehälter und Innenbehälter sowie das Einwegventil so aufwendig ist, daß sie in der Praxis kaum verwendet werdem kann, da Verpackungen Massenartikel sind, deren billige Herstellung Voraussetzung für ihren Einsatz ist.

Der Erfindung liegt die Aufgabe zugrunde, das Verfahren der einleitend beschriebenen Art so abzuwandeln, daß es die Herstellung von Verpackungen ermöglicht, bei welcher zum Abgeben des in der Verpackung befindlichen Füllguts der Innenbehälter vom Außenbehälter trennbar ist, um das Füllgut unter der Einwirkung eines Druckgefälles aus dem Innenbehälter austreten zu lassen. Die Herstellung von derartigen Verpackungen soll einfach sein, so daß auch kleinvolumige Behälter kostengünstig gefertigt werden können. Dabei soll die Verpackung bezüglich Handhabbarkeit und Aussehen gewissen Mindestanforderungen genügen können, die z. B. bei pharmazeutischen Gütern und Kosmetika gestellt werden. Insbesondere soll die Herstellung einer derartigen Verpackung dadurch vereinfacht werden, daß sie in einem Arbeitsgang hergestellt werden kann, wenn man von gewissen unwesentlichen Nachbearbeitungsvorgängen, beispielsweise Entfernen von Abfallteilen oder dgl., absieht. Trotz der einfachen Herstellung soll die Verpackung auch geeignet sein für hochviskose flüssige Füllgüter mit der Möglichkeit, letztere dosiert abzugeben.

Zur Lösung dieser Aufgabe schlägt die Erfindung vor, daß das Abquetschen von Überschußmaterial ohne gleichzeitige Bildung einer ein Verschließen des Außenbehälters bewirkenden Schweißnaht an diesem erfolgt, so daß eine ausreichend große Öffnung im Außenbehälter vorhanden ist, durch die der Bereich zwischen Außenbehälter leicht verformbaren beutelartigen Innenbehälter mit der Umgebungsatmosphäre verbunden ist, um den Druck der umgebenden Atmosphäre auf den Innenbehälter permanent einwirken zu lassen.

Aus dem den äußeren Abschnitt bildenden Material des Vorformlings wird der Außenbehälter der fertigen Verpackung gebildet, der der Verpackung die erforderliche mechanische Steifigkeit, Standfestigkeit und allgemeine Handhabbarkeit vermittelt und zudem auch die im Bedarfsfall die für Dekorationszwecke notwendigen Eigenschaften der Oberfläche aufweist, wohingegen der aus dem im inneren Abschnitt des Vorformlings gebildete Beutel das eigentliche Behältnis für das Füllgut darstellt. Aufgrund der Tatsache, daß die die beiden Behälter bildenden Materialien nicht miteinander verschweißbar sind, wird der innere, beutelartige Behälter, der im wesentlichen die Form des Außenbehälters aufweist, sich unter der Einwirkung eines Druckgefälles vom Außenbehälter lösen, wenn der Druck im inneren Behälter geringer ist als der im Außenbehälter. Ein wesentlicher Vorteil der Erfindung besteht darin, daß unter Anwendung des Koextrusions-Blasverfahrens auch hinsichtlich ihrer Formgebung verhältnismäßig komplizierte und unregelmäßige Verpackungen in einem Arbeitsgang hergestellt werden können. Das Herstellungsverfahren wird dadurch weder aufwendiger noch komplizierter. Da der Innenbehälter entleerbar ist, ohne daß Luft und damit Sauerstoff von außen in den Innenbehälter eindringt, kann zumindest bei bestimmten Füllgütern deren Lagerbarkeit auch bei angebrochener Verpackung merklich verlängert werden.

Die Öffnung, die den Bereich zwischen Außenbehälter und Innenbehälter mit der Umgebungsatmosphäre verbindet, kann in einfacher Weise dadurch hergestellt werden, daß nach Beendigung des Formgebungsvorganges und ausreichender Verfestigung des den Außenbehälter bildenden Materials auf dessen Boden eine Kraft zur Einwirkung gebracht wird, die einen Abstand zwischen den im Abquetschbereich gegenüberliegenden Wandteilen des Bodens des Außenbehälters herbeiführt. Dies kann dadurch erreicht werden, daß die Kraft noch bei innerhalb der Blasform befindlicher Verpackung auf den Boden des Außenbehälters ausgeübt wird, z. B. derart, daß die den Boden begrenzenden Teile der Blasform mit kleinen Vorsprüngen und/oder Ausnehmungen versehen sind, die einen Formschluß zwischen Boden und Blasform bewirken, so daß die Blasformteile im Zuge der Öffnungsbewegung derselben auf beide Bereiche des Bodens des Außenbehälters jeweils eine nach außen gerichtete Kraft ausüben, die die beiden Hälften des Bodens etwas auseinanderzieht. Eine andere Möglichkeit, eine derartige Öffnung mit Sicherheit herbeizuführen, kann durch eine nachträgliche Beeinflussung des äußeren Behälters erreicht werden, z. B. duch Überdruck im Inneren der Verpackung, wie es z. B. im Rahmen eines Verfahrens zum Prüfen der Dichtigkeit von Verpackungen üblich ist. Die das Vorhandensein einer Öffnung bewirkende Kraft kann auch bereits zu einem Zeitpunkt auf den Boden des Außenbehälters zur Einwirkung gebracht werden, in welchem dieser noch in gewissem Umfang plastisch verformbar ist, so daß die durch die Einwirkung der Kraft verursachte Verformung eine bleibende Verformung ist und nicht durch elastische Rückstellung aufgehoben wird. Ob und inwieweit diese besonderen Maßnahmen zur Herbeiführung der vorerwähnten Öffnung erforderlich sind, wird auf die jeweiligen Umstände ankommen, da aufgrund des Nichtzustandekommens einer Schweißnaht am Boden des äußeren Behälters dieser im Normalfall immer eine ausreichend große Öffnung aufweisen wird, um den Druck der umgebenende Atmosphäre auf den Innenbehälter permanent einwirken zu lassen.

Gemäß einem weiteren Vorschlag der Erfindung kann der innere Abschnitt des Vorformlinges zur Herstellung des Innenbehälters durch Koextrusion mehrerer Schichten aus unterschiedlichen Materialien hergestellt werden, die zu einer Einheit verschweißt werden. Dises Verfahren ist an sich bekannt und wird insbesondere dann verwendet, wenn es darauf ankommt, die Behälterwandung mit einer Sperrschicht zu vesehen, die das Hindurchdiffundieren von bestimmten Stoffen verhindert. In diesem Fall würde der innere Abschnitt des Vorformlings selbst aus wenigstens zwei, im allgemeinen drei Unterabschnitten bestehen, die allerdings spätestens beim Aufweiten in der Blasform durch Schweißen zu einer mehrschichtigen Einheit verbunden werden, wobei durchweg zwischen zwei Schichten aus unterschiedlichen Materialien eine Haftvermittlerschicht aus einem dritten Material angeordnet ist, die mit den beiden anderen Materialien eine intensive Haftverbindung eingeht. Eine solche Haftvermittlerschicht fehlt beim Verfahren und bei der Verpackung gemäß der Erfindung zwischen Außenbehälter und beutelartigem Innenbehälter.

Wenngleich der Innenbehälter gegenüber dem Außenbehälter unter der Einwirkung des bereits erwähnten Druckgefälles zum Zwecke der Abgabe von Füllgut bewegbar sein muß, wird es im allgemeinen zweckmäßig sein, in der Nähe der Austrittsöffnung der Verpackung Außenbehälter und Innenbehälter miteinander zu verbinden. Die Notwendigkeit einer solchen Verbindung ist auch von der Gestalt der Verpackung abhängig. So ist es ohne weiteres möglich und in vielen Fällen erwünscht, der Verpackung eine flaschenförmige Gestalt zu geben, wobei der Innenbehälter, falls erforderlich, vorteilhaft im Bereich des Flaschenhalses am Außenbehälter befestigt ist. Es kann jedoch davon ausgegangen werden, daß bei flaschenartiger Ausgestaltung der Verpackung ein gewisser Formschluß zwischen Außenbehälter und Innenbehälter jedenfalls in einer Richtung durch Vorhandensein der Flaschenschulter bewirkt wird. Hinzu kommt, daß der Flaschenhals im allgemeinen einen wesentlich kleineren Durchmesser aufweist als der eigentliche Körper der Flasche, welche Tatsache ebenfalls ein Fixieren des Innenbehälters im Außenbehälter begünstigt. Darüber hinaus ist es aber auch ohne weiteres möglich, zur Erzielung einer formschlüssigen Verbindung zwischen Außenbehälter und Innenbehälter im Bereich des Flaschenhalses - oder bei anderer Gestalt der Verpackung sonstwo nahe der Entleerungsöffnung - Außenbehälter und Innenbehälter mit wenigstens einer vorzugsweise umlaufenden nutartigen Vertiefung und/oder wenigstens einem vorzugsweise umlaufenden wulstartigen Vorsprung oder sonstwie einer geeigneten Profilierung zu versehen.

Eine andere Möglichkeit besteht darin, den Außendurchmesser des schlauchförmigen Vorformlinges zumindest in einem Teilbereich des an der Verpackung herzustellenden Halses größer zu wählen als den Außendurchmesser des zugehörigen Bereichs der Blasform und beim Schließen der letzteren von beiden Abschnitten überschüssiges Material bei gleichzeitiger Bildung wenigstens einer Schweißnaht am inneren Abschnitt abzuquetschen, ohne daß gleichzeitig eine Schweißnaht am äußeren Schlauch entsteht. Es handelt sich hierbei um einen Vorgang, der dem der Bildung der Schweißnaht am Boden des inneren Behälters unter gleichzeitiger Abquetschung von Überschußmaterial entspricht, wobei die beiden einander gegenüberliegenden Bodenbereiche des äußeren Behältes unverschweißt bleien. Im Ergebnis bedeutet dies, daß der Flaschenhals aus zwei Abschnitten besteht, deren Trennebene radial und parallel zu seiner Längsachse verläuft, wobei entsprechende Randbereiche des inneren Behältes zwischen beiden Abschnitten eingeklemmt sind. Zu diesem Zweck ist der Hals außenseitig mit einem die Funktion einer Bandage ausübenden Teil versehen. Dabei kann es sich vorteilhaft um ein auf den Flaschenhals außenseitig aufschraubbares Teil handeln, z.B. eine mit einem Ventil versehene Pumpe, durch deren manuelle Betätigung der für die Entleerung des Innenbehälters erforderliche Unterdruck in ersterem erzeugt werden kann.

Gemäß einem weiteren Merkmal der Erfindung kann bei der Formgebung der Verpackung der Endbereich des inneren schlauchförmigen Vorformlings nach außen über die stirnseitige Begrenzung des Außenbehälters umgebogen werden, so daß an der fertige Verpackung dieser Endbereich die stirnseitige Begrenzung des Außenbehälters abdeckt. Hierdurch wird einmal zusätzlich eine formschlüssige Verbindung zwischen Außenbehälter und Innenbehälter erreicht, die im übrigen, unabhängig davon, ob ein Flaschenhals vorhanden ist, auch bei anderen Behälterformen auf diese Weise erreicht werden kann, wodurch verhindert wird, daß der Innenbehälter in den Außenbehälter hineinrutscht. Bei einer flaschenförmigen Verpackung wird durch die bereits erwähnte Flaschenschulter ein in Gegenrichtung wirksamer Formschluß verursacht. Ein weiterer Vorteil dieses Merkmals der Erfindung besteht darin, daß der über die stirnseitige Begrenzung des Außenbehälters abgebogene Endbereich des Innenbehälters zugleich als Dichtring dienen kann, der aufgrund seiner elastischen Nachgiebigkeit ohne zusätzliche Maßnahmen ein dichtes Anbringen des Verschlusses der Verpackung bzw. der bereits erwähnten Pumpe erleichtert. Hierbei ist davon auszugehen, daß im allgemeinen der Kunststoff des Außenbehälters aufgrund der letzterem zugedachten Funktion verhältnismäßig hart ist, also die für eine Dichtfunktion optimalen Eigenschaften bezüglich seiner elastischen Verformbarkeit nicht aufweist. Hingegen besteht der Innenbehälter, der im übrigen im Normalfall immer wesentlich dünnwandiger sein wird als der Außenbehälter, aus einem auch elastisch leichter verformbarem Material, so daß er die für eine Dichtung besseren Eigenschaften aufweist als der Außenbehälter.

Die Erfindung betrifft auch eine mit einer verschließbaren Öffnung versehene, im Koextrusions-Blasverfahren hergestellte Verpackung, die mit einem im wesentlichen formsteifen Außenbehälter versehen ist, innerhalb dessen ein das Füllgut aufnehmender Innenbehälter angeordnet ist, wobei Außenbehälter und Innenbehälter aus unterschiedlichen thermoplastischen Kunststoffen bestehen, die miteinander keine Verbindung eingehen, und der Innenbehälter aus flexiblem Material besteht und an seinem bodenseitigen Ende durch eine Schweißnaht dicht verschlossen ist. Diese Verpackung ist dadurch gekennzeichnet, daß der Außenbehälter wenigstens eine Öffnung aufweist, durch die der Bereich zwischen Außenbehälter und beutelartigem Innenbehälter mit der Umgebungsatmosphäre verbindbar ist, wobei der Außenbehälter an seinem bodenseitigen Ende zwei einander gegenüberliegende Wandbereiche aufweist, die die Öffnung derarta begrenzen, daß der Druck der umgebenden Atmosphäre auf den Innenbehälter permanent einwirkt.

Diese Ausgestaltung begünstigt eine billige und einfache Fertigung der Verpackung, da sowohl die Herstellung der Schweißnaht als auch die Herstellung der Öffnung für den Durchgang der Luft in einem Arbeitsgang bewirkt werden können, in dem zwei einander gegenüberliegende Bereiche von Außenbehälter und Innenbehälter gegeneinander gedrückt werden, wobei die am Innenbehälter sich bildende Schweißnaht im wesentlichenparallel zu den beiden Wandbereichen des Außenbehältes verlaufen wird, die die Öffnung begrenzen.

Die Erfindung sieht weiterhin die Möglichkeit vor, daß durch entsprechende Verteilung der Wanddicke des Innenbehälters dieser beim Entleerungsvorgang unter der Einwirkung des Druckgefälles in kontrollierter Weise zusammengedrückt wird, so daß die dadurch bewirkte Verdrängung des Füllgutes gezielt erfolgen kann, z. B. derart, daß die Querschnittsverringerung an einem Endbereich des Innenbehälters beginnend sich beim Entleeren in Richtung auf das andere Ende fortsetzt, wobei es gleichgültig ist, ob das Entleeren in einem Vorgang oder absatzweise erfolgt. So wird es bei Vorhandensein eines Tauchrohres in der Verpackung, durch welches das Füllgut aus dem Innenbehälter entnommen wird, dessen Wanddicke so zu bemessen und zu verteilen sein, daß der Innenbehälter von oben nach unten zusammengedrückt wird, um das Füllgut im Verlauf des Entleerungsvorganges in den unteren Bereich des Innenbehälters zu verdrängen, also in jenen Bereich, in welchem das Tauchrohr das Füllgut aufnimmt. In einem solchen Fall würde die Wandstärke des Innenbehälters von der Entleerungsöffnung in Richtung auf den Boden zunehmen. Im umgekehrten Fall, also bei Verdrängung des Füllgutes in Richtung auf die Entleerungsöffnung, würde die Wanddicke des Innenbehälters vom Boden in Richtung auf die Entnahmeöffnung abnehmen. Es ist darüber hinaus auch möglich, den Innenbehälter mit parallel zu seiner Längserstreckung verlaufenden Zonen größerer und geringerer Wanddicke zu versehen, um ein kontrolliertes Zusammendrücken zu erreichen mit dem Ziel, eine möglichst weitgehende Entleerung des Innenbehälters zu ermöglichen.

Eine den jeweiligen Erfordernissen angepaßte Verteilung der Wandstärke kann in bekannter Weise dadurch erreicht werden, daß während des Extrusionsvorganges die Wanddicke des inneren Abschnittes des Vorformlings nach einem entsprechend festgelegten Programm gesteuert wird. Entsprechendes gilt auch für das Anbringen von in Längsrichtung des Innenbehälters verlaufenden Zonen unterschiedlicher Wanddicke.

Die Verpackung kann mit einem Tauchrohr versehen sein, welches sich bis nahe dem bodenseitigen Ende des Innenbehälters erstreckt. Zusätzlich zu der Öffnung am bodenseitigen Ende des Tauchrohres kann dieses noch mit wenigstens einer weiteren Öffnung versehen sein, die sich in einem Abstand von der bodenseitigen Öffnung befindet.

In der Zeichnung sind Ausführungsbeispiele der Erfindung dargestellt. Es zeigen:

Fig. 1 - 3 im Schema aufeinanderfolgende Verfahrensschritte bei der Herstellung einer Verpackung im Koextrusions-Blasverfahren,

Fig. 4 einen Ausschnitt aus der Wandung der fertigen Verpackung in stark vergrößertem Maßstab,

Fig. 5 einen Ausschnitt aus dem Boden der noch in der Blasform befindlichen Verpackung in vergrößertem Maßstab,

Fig. 6 eine der Fig. 5 entsprechende Darstellung einer anderen Ausführungsform,

Fig. 7 im Schema einen Ausschnitt aus dem Boden der Verpackung unmittelbar nach Beendigung des Formgebungsvorganges in der Blasform in Draufsicht,

Fig. 8 eine der Fig. 7 entsprechende Darstellung der Ausführungsform gemäß Fig. 6, nach zusätzlicher Einwirkung auf den Boden,

Fig. 9 einen Schnitt nach der Linie IX-IX der Fig. 8,

Fig. 10 die Seitenansicht des Halses einer flaschenförmigen Verpackung, teilweise im Schnitt,

Fig. 11 die Seitenansicht einer teilweise entleerten Verpackung, teilweise im Schnitt,

Fig. 12 einen Querschnitt durch eine gefüllte Verpackung,

Fig. 13 eine der Fig. 12 entsprechende Darstellung der vollständig entleerten Verpackung.

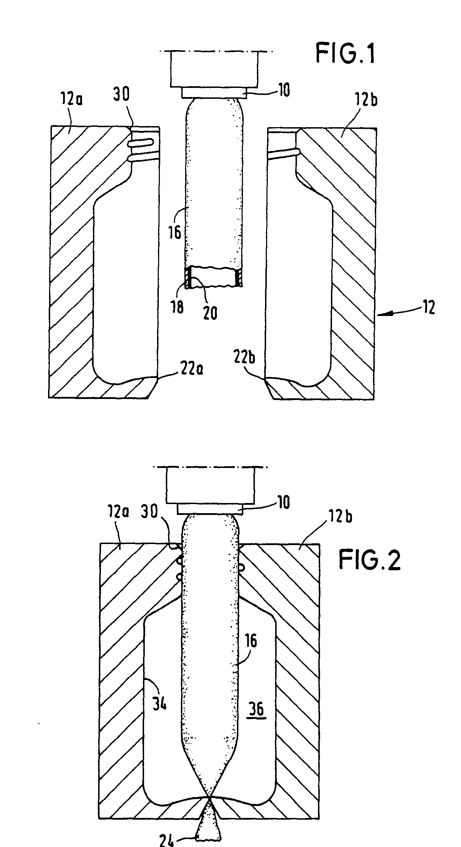

In den Figuren 1 - 3 sind schematisch die wesentlichen Teile einer Vorrichtung zur Durchführung des Koextrusions-Blasverfahrens dargestellt. Es handelt sich dabei um den Spritzkopf 10 einer Koextrusionsvorrichtung, die beiden Teile 12a, 12b einer Blasform 12 sowie einen Dorn 14, der mit einem Längskanal 15 für die Zuführung eines Druckmittels versehen ist.

Das Herstellungsverfahren läuft in der Weise ab, daß zunächst aus dem Spritzkopf 10 im Koextrusionsverfahren ein schlauchförmiger Vorformling 16 extrudiert wird, der zwei koaxial zueinander angeordnete und gleichzeitig extrudierte schlauchförmige Abschnitte 18 und 20 aufweist. Für die Herstellung der beiden Abschnitte 18, 20 werden unterschiedliche thermoplastische Kunststoffe verwendet, die nicht miteinander verschweißbar sind. D. h., daß die Extrusionsvorrichtung wenigstens zwei mit unterschiedlichen Materialien beschickte, nicht dargestellte Extruder aufweist. In Fig. 1 der Zeichnung ist der Vorformling 16 so dargestellt als ob die beiden schlauchförmigen Abschnitte 18 und 20 in unmittelbarem Kontakt miteinander sind. Dies kann insbesondere dann der Fall sein, wenn während des Extrudierens durch Zuführen eines gasförmigen Mediums innerhalb des Vorformlings 16 ein geringer Überdruck herrscht. Es ist aber auch möglich, daß zwischen den beiden Abschnitten 18 und 20 ein Luftspalt vorhanden ist.

Sobald der Vorformling 16 die für die Herstellung einer Flasche notwendige Länge erreicht hat, wird die in Fig. 1 in ihrer Offenstellung gezeichnete Blasform 12 durch Zusammenfahren der beiden Formhälften 12a, 12b geschlossen. In der Endphase des Schließvorganges wird durch an den Blasformhälften 12a, 12b befindliche Abquetschkanten 22a, 22b Überschußmaterial 24 abgequetscht, wobei gleichzeitig der Vorformling im Bereich des an der Flasche zu bildenden Bodens zusammengedrückt wird (Fig. 2).

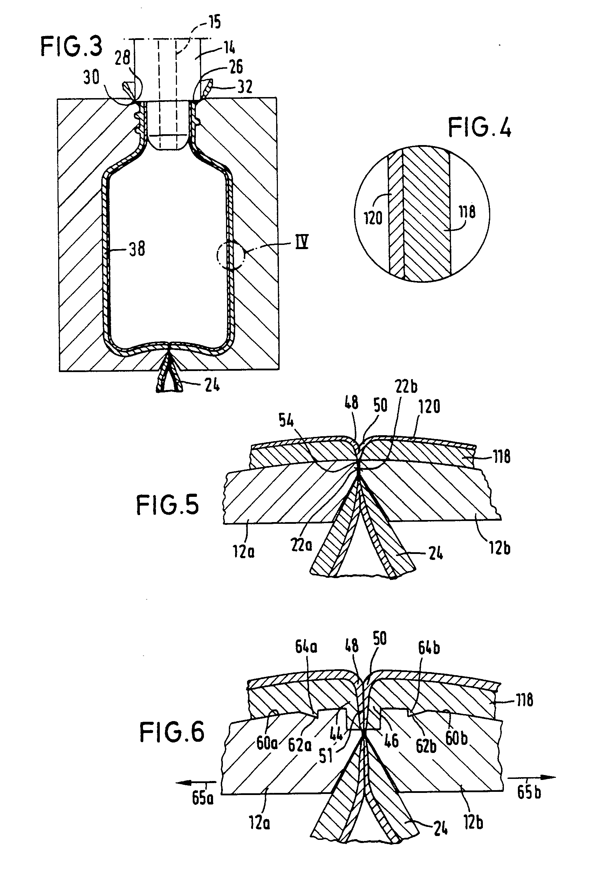

Nach dem Schließen der Blasform 12 wird der Vorformling 16 vom Spritzkopf 10 in üblicher Weise abgetrennt. In das so gebildete obere, offene Ende des Vorformlinges 16 wird der Dorn 14 eingeführt, nachdem in geeigneter Weise durch Relativbewegung zwischen Spritzkopf 10 und Blasform 12 der dazu notwendige Bewegungsraum geschaffen worden war. Bei dem in Fig. 3 der Zeichnung dargestellten Ausführungsbeispiel ist der Dorn 14 als Blas- und Kalibrierdorn ausgebildet, der mit einem umlaufende Absatz 26 versehen ist, dessen Kante 28 im Zusammenwirken mit dem Einlauf 30 der Blasform 12 auch am anderen Ende des Vorformlinges 16 überschüssiges Material 32 abquetscht.

Der im Inneren des Vorformlinges 16 durch das durch den Längskanal 15 des Dornes 14 zugeführte Druckmittel oder in anderer geeigneter Weise hervorgerufene Überdruck bewirkt ein Aufweiten des Vorformlings 16 bis zur Anlage an der Wandung 34 des Formnestes 36, dessen Gestalt der der herzustellenden Verpackung entspricht.

Dieser Zustand ist in Fig. 3 der Zeichnung dargestellt. Nach ausreichender Abkühlung kann die so hergestellte flaschenförmige Verpackung 38 aus der geöffneten Blasform 12 herausgenommen werden.

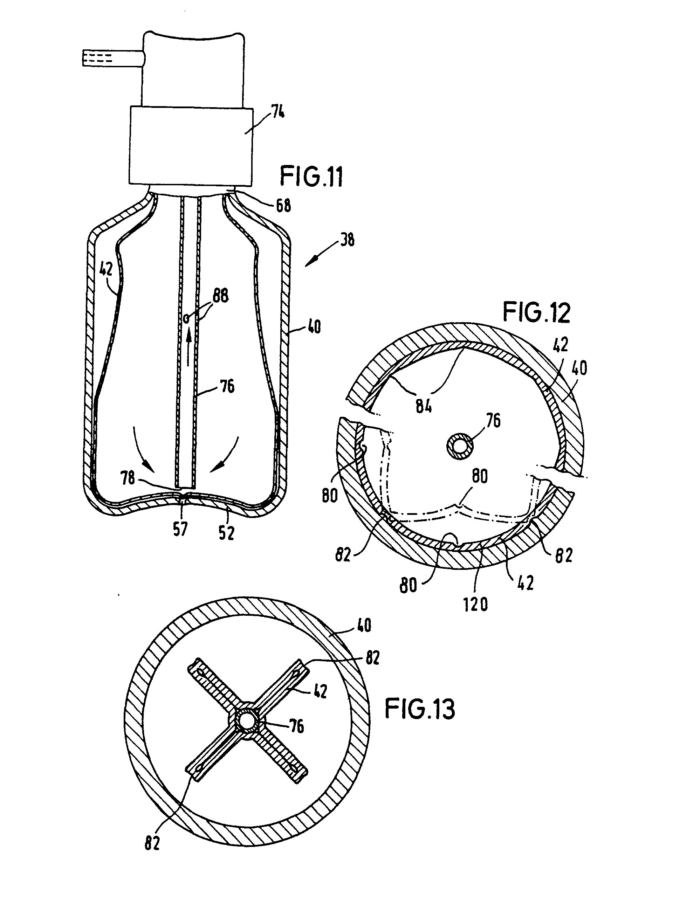

Fig. 4 der Zeichnung läßt erkennen, daß die fertige Verpackung 38 analog dem Vorformling 16 ebenfalls doppelwandig ausgebildet ist. Die beiden Wandteile 118, 120 sind jedoch nicht miteinander verschweißt, so daß im Ergebnis die Gesamtheit der inneren Wandung 120 einen von der äußeren Wandung 118 unabhängigen Innenbehälter 42 darstellt (Fig. 11), der innerhalb des von der Gesamtheit der Wandung 118 gebildeten Außenbehälters 40 angeordnet ist. Dabei sind die Auswahl der beide Behälter bildenden Materialarten und die Wandstärken beider Behälter und damit auch der beiden schlauchförmigen Abschnitte 18, 20 des Vorformlings so gewählt, daß der Außenbehälter 40 eine ausreichende Eigensteifigkeit und Formbeständigkeit aufweist, wie sie üblichen Kunststofflaschen eigen sind, wohingegen der Innenbehälter 42 nach Art eines Beutels leicht verformbar ist.

Im allgemeinen werden innerer schlauchförmiger Abschnitt 20 und damit die Wandung 120 des Innenbehälters 42 in Relation zum äußeren schlauchförmigen Abschnitt 18 und damit zur Wandung 118 des Außenbehälters 40 eine geringere Wandstärke aufweisen als dies in der Zeichnung dargestellt ist.

In den Fig. 5 und 6 sind zwei Möglichkeiten der Ausgestaltung des bodenseitigen Verschlusses der Verpackung 38 dargestellt. Da im Vorformling 16 der innere schlauchförmige Abschnitt 20 sich über die gesamte innere Mantelfläche des äußeren Abschnittes 18 erstreckt, also im Ergebnis eine Art Auskleidung des letzteren darstellt, kommen beim Zusammendrücken des bodenseitigen Endes des Vorformlinges die beiden im Abquetschbereich zueinander parallelen Wandbereiche 44 und 46 (Fig. 6, 8 und 9) des äußeren Abschnittes 18 des Vorformlinges 16 nicht miteinander in Berührung. Im Zuge des Abquetschvorganges wird der Vorformling im Bereich der Abquetschkanten 22a, 22b flach zusammengedrückt, so daß im Ergebnis die beiden im wesentlichen parallel zueinander verlaufenden Wandbereiche einander gegenüberliege. Da sich zwischen den Wandbereichen 44 und 46 des äußeren Abschnitts 18 die beiden Wandbereiche 48 und 50 des inneren schlauchförmigen Abschnittes 20 bzw. der späteren Wandung 120 des Innenbehälters 42 befinden, erfogt keine Verschweißung der Wandbereiche 44 und 46 miteinander. Jedoch werden die Wandbereiche 48, 50 des inneren Abschnittes 20 unter der Einwirkung des durch die Abquetschkanten 22a, 22b der Blasformhälften 12a, 12b auusgeübten Druckes unter Bildung einer dauerhaften Naht miteinander verschweißt, so daß der beutelartige Innenbehälter 42 an seinem unteren, bodenseitigen Ende verschlossen ist und bleibt. Dies ist insbesondere in den Figuren 5, 6 und 9 erkennbar, wobei die Fig. 6 und 9 eine Ausführungsform zeigen, bei welcher die beiden. 1 Formhälften 12a, 12b im Abquetschbereich eine Ausgestaltung aufweisen, die zu einer großflächigen Berührung der beiden Wandbereiche 48 und 50 und damit auch zu einer entsprechend großflächigeren Schweißnaht 51 führt.

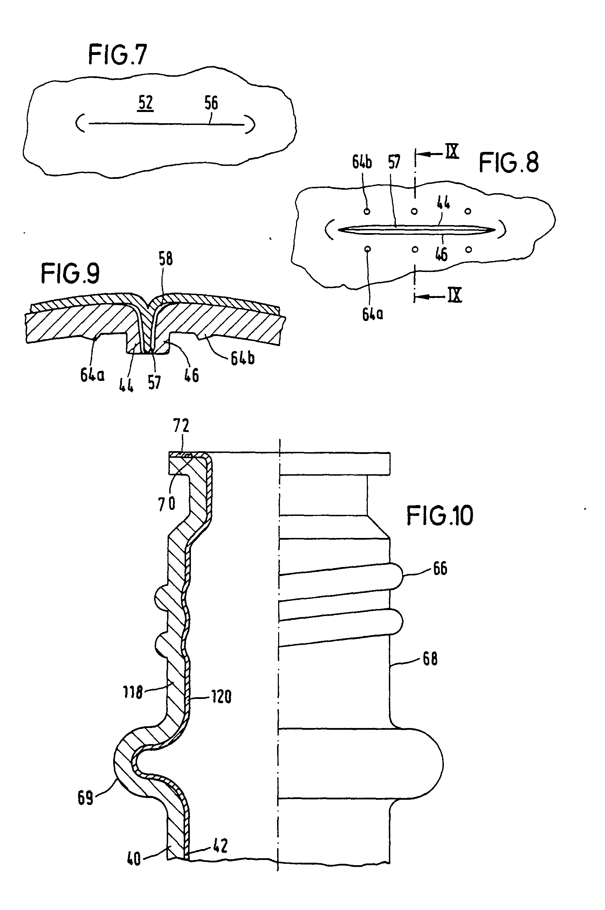

Fig. 7 zeigt den Bereich des Bodens 52, in welchem der Abquetschvorgang stattgefunden hat, und zwar unmittelbar nach Beendigung des Formgebungsvorganges innerhalb der geschlossenen Blasform bei einer Ausführung, die etwa jener der Fig. 5 entspricht. Diese zeigt, daß im Bereich zwischen den Abquetschkanten 22a, 22b ein dünner Film 54 aus thermoplastischem Material beider Abschnitte 18, 20 verbleibt, der im allgemeinen nach der Entnahme der Verpackung aus der Blasform mit dem vom Überschußmaterial gebildeten Abfallstück 24 abgerissen wird. Am Boden 52 verbleibt normalerweise nur ein schmaler Grat 56, der keinerlei Nachbearbeitung erfordert. Dieser Grat 56 stellt zugleich für die beiden Wandbereiche 44 und 46 des Außenbehältes 40 die Trennebene dar, in welcher sie einander berühren, ohne jedoch miteinander verschweißt zu sein. Im allgemeinen wird im Zuge der endgültigen Abkühlung, die das die Verpackung bildende Material außerhalb der Blasform erfährt, eine geringfügige Schrumpfung auch des den Boden bildenden Materials eintreten mit der Folge, daß aufgrund dieses Vorganges die beiden einander gegenüberliegenden Wandbereiche 44 und 46 unter Bildung einer Öffnung 57 sich etwas voneinander entfernen, wobei diese Öffnung die Verbindung zwischen der Außenatmosphäre und dem Bereich 58 zwischen Außenbehälter 40 und Innenbehälter 42 darstellt. Die am unteren Ende des Innenbehälters 120 befindliche Schweißverbindung bleibt von diesen Vorgängen unbeeinflußt, wie insbesondere auch die Darstellung gemäß Fig. 9 zeigt.

Es ist aber auch möglich, diesen Vorgang des Auseinanderbewegens der beiden Wandteile 44 und 46 des Außenbehälters gezielt und kontrolliert herbeizuführen. Zu diesem Zweck können die Bodenbereiche 60a, 60b mit Unebenheiten, z. B. in Form der in Fig. 6 dargestellten Ausnehmungen 62a, 62b versehen sein, in die hinein beim Aufweitvorgang Material der Außenwand 118 unter Bildung von kleinen Vorsprüngen 64 eindringt. Die Ausnehmungen 62a, 62b bzw. die in ihnen geformten Vorsprünge 64 sind dabei, wie insbesondere Fig. 6 erkennen läßt, so begrenzt, daß beim Öffnen der Blasform 12 durch Auseinanderbewegen der beiden Blasformteile 12a, 12b in Richtung der Pfeile 65a, 65b zunächst eine Mitnahme der jeweils zugeordneten Vorsprünge 64a, 64b erfolgt mit dem Ergebnis, daß die beiden einander gegenüberliegenden Wandbereiche 44, 46 des Bodens 52 des äußeren Behälters 118 unter Bildung der Öffnung 57 auseinandergezogen werden. Die Mitnahme der Vorsprünge 64a, 64b erfolgt nur über eine kurze Wegstrecke, da aufgrund der elastischen Verformbarkeit des thermoplastischen Materials bei Übersteigen einer bestimmten auf die Vorsprünge einwirkenden Kraft erstere aus den jeweils zugehörige Ausnehmungen 62a, 62b herausspringen.

Fig. 10 zeigt den mit Außengewinde 66 versehenen Hals 68 einer flaschenförmigen Verpackung. An den Flaschenhals ist ein umlaufender wulstartiger Vorsprung 69 angeformt, der gemäß der Darstellung der Fig. 10 zu einer formschlüssigen Verankerung des Innenbehälters 120 am Außenbehälter 118 führt, durch die eine relative Verschiebung zwischen Außenbehälter und Innenbehälter in axialer Richtung verhindert wird. Da normalerweise auch bei maximaler Füllung der Verpackung der Flaschenhals frei von Füllgut bleibt, besteht im Bereich des Flaschenhalses keinerlei Notwendigkeit irgendeiner Bewegung oder Verformung des Innenbehälters 120, so daß es keine Rolle spielt, wenn die Wulst 69 auch zu einer größeren Formsteifigkeit des Innenbehälters führen sollte. Im übrigen kann es sogar zweckmäßig sein, die Wandstärke des Innenbehälters 120 im Bereich des Halses 68 stärker auszuführen als in dem das Füllgut aufnehmenden Bereich, um zu verhindern, daß unter der Einwirkung des Druckgefälles der Innenbehälter 42 sich auch im Bereich des Halses 68 vom Außenbehälter 40 abhebt.

Fig. 10 läßt weiterhin erkennen, daß der halsseitige Endbereich des inneren schlauchförmigen Abschnittes 20 bzw. der daraus resultierenden Wandung des Innenbehälters 42 nach außen derart abgebogen ist, daß er die stirnseitige Begrenzungsfläche 70 des Außenbehälters 40 abdeckt, wodurch ein zusätzlicher Formschluß zwischen Außenbehälter und Innenbehälter herbeigeführt wird. Außerdem dient dieser stirnseitige Endbereich 72 des Innenbehälters 42 auch als Dichtfläche, der eine einwandfreie Abdichtung zwischen der auf den Hals 68 auschraubbaren Einrichtung 74 (Fig. 11) und der Verpackung bewirkt.

Diese Einrichtung 74 ist mit einer manuell betätigbaren Pumpe versehen, durch die ein Unterdruck im Innenbehälter 42 erzeugt werden kann, so daß aufgrund des dadurch von außen nach innen entstehende Druckgefälles der atmosphärische Außendruck, der durch die Öffnung 57 im Boden des Außenbehälters außen auf den Innenbehälter 42 zur Einwirkung kommt, letzterer unter Volumenverringerung und dadurch bewirkter Verdrängung des Füllgutes zusammengedrückt wird. Das Füllgut wird dabei in Richtung auf den Flaschenhals und die darauf befindliche Einrichtung 74 verdrängt, die mit einem geeigneten Abgabeventil oder dgl. versehen ist.

Die in Fig. 11 dargestellte Verpackung ist mit einem Tauchrohr 74 versehen, das bis nahe an den Boden der Verpackung reicht. Um sicherzustellen, daß beim Entleerungsvorgang das Füllgut zunächst in Richtung auf die Eintrittsöffnung 78 des Tauchrohres 76 verdrängt wird, um so eine möglichst vollständige Entleerung zu ermöglichen, ist die Wandung 120 des Innenbehälters 42 so bemessen und ausgebildet, daß im Zuge des Entleerungsvorganges zunächst der dem Flaschenhals 68 zugekehrte Bereich des Innenbehälters 42 durch das Druckgefälle zusammengedrückt wird, wobei dieser Vorgang sich mit zunehmender Entleerung nach unten, also in Richtung auf den Boden 52 fortsetzt. Dies kann durch eine entsprechende Bemessung und Verteilung der Stärke der Wandung 120 des Innenbehältes 42 erreicht werden. Das Tauchrohr 76 ist mit wenigstens einer zusätzlichen Öffnung 88 versehen, die sich bei dem Ausführungsbeispiel gemäß Fig. 1 im mittleren Bereich des Tauchrohres 76 befindet. Solche zusätzlichen Öffnungen können auch an anderen Bereichen des Tauchrohres vorgesehens ein, beispielsweise nahe der Bodenöffnung 78, um, falls die Bodenöffnung 78 durch die im Zuge des Entleerungsvorganges ihre Lage ändernde Wandung 120 des Innenbehälters 42 ganz oder teilweise verschlossen wird, noch eine ausreichende Entleerung des Innenbehälters zu ermöglichen.

Eine möglichst vollständige Entleerung der Verpackung wird auch dadurch begünstigt, daß die Volumenabnahme des Innenbehälters in vorherbestimmter Weise derart erfolgt, daß in entleertem Zustand die aufgrund des Druckgefälles gegeneinandergedrückten Wandteile des Innenbehälters möglichst bis zur unmittelbaren Anlage einander kommen, so daß sich nur kleine Toträume bilden, in denen Füllgut verbleibt.

In Fig. 12 der Zeichnung sind zwei mögliche Ausführungen dargestellt. Bei der im unteren Bereich der Fig. 12 dargestellten Ausführung ist die Wandung 120 des Innenbehälters 42 mit parallel zur Längsachse verlaufenden nutartigen Vertiefungen 80 und 82 versehen, die Schwachzonen darstellen, entlang welcher die Wandung 120 gemäß dem in Fig. 12 gestrichelten Zwischenstadium eine Faltung entlang vorherbestimmter Zonen erfährt. Fig. 12 läßt ferner erkennen, daß die Nuten 80 an der inneren und die Nuten 82 an der äußeren Begrenzungsfläche der Wandung 42 eine Faltung zur Erzielung einer weitgehenden Entleerung begünstigen. Aus dem in Fig. 12 gestrichelt dargestellten Zwischenstadium während des Faltvorganges ergibt sich, daß in den Bereichen der innen angeordnete Nute 80 die Wandung 142 sich in Richtung nach innen, also auf das Tauchrohr 76 bewegt, so daß in dem in Fig. 13 dargestellten Endzustand, in welchem der Innenbehälter 42 nahezu vollständig entleert ist, letzterer in eine regelmäßige Gestalt gefaltet ist derart, daß die jeweils außeneitig angebrachten Nuten 82 begrenzende Wandteile mit ihren Innenseiten aneinanderliegen. Die die Nuten 80 aufweisenden Zonen liegen bei vollständiger Entleerung im Idealfall am Steigrohr 76 an, wenn dieses über seine gesamte Länge mittig verläuft.

Bei der im oberen Bereich der Fig. 12 dargestellten Ausführungsform sind die parallel zur Längsachse der Verpackung verlaufenden Schwachzonen in der Weise hergestellt worden, daß die innenseitige Begrenzung der Wandung 120 des Innenbehälters 142 im Querschnitt ein Vieleck bildet, wobei jeweils an den Ecken 84 des Vieleckes die Zonen geringster Wanddicke sich befinden, die den Nuten 80 bzw. 82 der im unteren Teil der Fig. 12 dargestellten Ausführung entsprechen.

Bei einer bevorzugten Ausführungsform der Erfindung besteht der Außenbehälter aus PVC, wohingegen der Innenbehälter aus Polyäthylen gefertigt ist. Beide Werkstoffe sind für die den beiden Behältern jeweils zugedachten Funktionen gut geeignet. Es sind selbstverständlich auch andere Werkstoffe sowohl für den Außenbehälter als auch für den Innenbehälter verwendbar.

**Patentansprüche**

1. Verfahren zum Herstellen einer mit einer verschließbaren Öffnung versehenen Verpackung (38), die mit einem im wesentlichen formsteifen Außenbehälter (40) versehen ist, innerhalb dessen ein das Füllgut aufnahmende Behälter (42) aus flexiblem Material angeordnet ist, wobei im Koextrusionsverfahren zunächst ein aus zwei im wesentlichen koaxialen schlauchförmigen Abschnitten (18, 19) bestehender Vorformling (16) extrudiert wird und die gleichzeitig extrudierten Abschnitte (18, 20) aus unterschiedlichen, miteinander keine Verbindung eingehenden thermoplastischen Kunststoffen bestehen und nach Erreichen der erforderlichen Länge in einer Blasform (12) unter Anwendung von innerem Überdruck bis zur Anlage des äußeren Abschnittes (18) an der Wandung der Blasform (12) aufgeweitet werden und der Boden (52) der Verpackung (38) unter Abquetschen von Überschußmaterial (24) bei gleichzeitiger Bildung einer Schweißnaht (51) am Innenbehälter (42) gebildet wird, dadurch gekennzeichnet, daß das Abquetschen von Überschußmaterial (24) ohne gleichzeitige Bildung einer ein Verschließen des Außenbehälters (40) bewirkenden Schweißnaht an diesem erfolgt, so daß eine ausreichend große Öffnung (57) im Außenbehälter (40) vorhanden ist, durch die der Bereich zwischen Außenbehälter (40) und leicht verformbaren, beutelartigen Innenbehälter (42) mit der Umgebungsatmosphäre verbunden ist, um den Druck der umgebenden Atmosphäre auf den Innenbehälter (42) permanent einwirken zu lassen.

2. Verfahren nach Anspruch 1, dadurch gekennzeichnet, daß nach Beendigung des Formgebungsvorganges und ausreichender Verfestigung des den Außenbehälter (40) bildenden Materials auf dessen Boden (52) eine Kraft zur Einwirkung gebracht wird, die einen Abstand zwischen den im Abguetschbereich gegenüberliegenden Wandteilen (44, 46) des Bodens des Außenbehälters (40) herbeiführt.

3. Verfahren nach Anspruch 2, dadurch gekennzeichnet, daß die Kraft noch bei innerhalb der Blasform (12) befindlicher Verpackung (38) auf den Boden (52) des Außenbehälters (40) ausgeübt wird.

4. Verfahren nach Anspruch 2, dadurch gekennzeichnet, daß die Kraft durch Wirksamwerden von Überdruck innerhalb der Verpackung (38) auf den Boden (52) des Außenbehälters (40) zur Einwirkung gebracht wird.

5. Verfahren nach Anspruch 2, dadurch gekennzeichnet, daß die Kraft zu einem Zeitpunkt auf den Boden (52) des Außenbehälters (40) zur Einwirkung gebracht wird, in welchem dieser noch in gewissem Umfange plastisch verformbar ist.

6. Verfahren nach Anspruch 1, dadurch gekennzeichnet, daß der innere Abschnitt (20) des Vorformlings (16) zur Herstellung des Innenbehälters (42) durch Koextrusion mehrerer Schichten aus unterschiedlichem Material hergestellt wird, die zu einer Einheit verschweißt werden.

7. Verfahren nach Anspruch 1, dadurch gekennzeichnet, daß die Verpackung (38) mit einer flaschenförmigen Gestalt versehen wird und der Innenbehälter (42) im Bereich des Flaschenhalses (68) am Außenbehälter verankert wird.

8. Verfahren nach Anspruch 7, dadurch gekennzeichnet, daß zur Erzielung einer formschlüssigen Verbindung zwischen Außenbehälter (40) und Innenbehälter (42) im Bereich des Flaschenhalses (68) dieser mit wenigstens einer vorzugsweise umlaufenden nutartigen Vertiefung und/oder wenigstens einem vorzugsweise umlaufenden wulstartigen Vorsprung (69) versehen wird.

9. Verfahren nach Anspruch 7, dadurch gekennzeichnet, daß der Außendurchmesser des schlauchförmigen Vorformlings (16) zumindest in einem Teilbereich des an der Verpackung (38) herzustellenden Halses (68) größer ist als der Außendurchmesser des zugehörigen Bereiches der Blasform (12) und beim Schließen der letzteren vom Vorformling (16) überschüssiges Material bei gleichzeitiger Bildung wenigstens einer Schweißnaht am inneren Abschnitt (20) abgequetscht wird, ohne daß gleichzeitig eine Schweißnaht am äußeren Abschnitt (18) entsteht.

10. Verfahren nach Anspruch 1, dadurch gekennzeichnet, daß bei der Formgebung der Verpackung (38) der Endbereich des inneren schlauchförmigen Vorformlinges (20) nach außen über die stirnseitige Begrenzung (70) des Außenbehälters (40) umgebogen wird.

11. Verfahren nach Anspruch 1, dadurch gekennzeichnet, daß durch entsprechende Verteilung der Wanddicke des Innenbehälters (42) dieser beim Entleerungsvorgang unter der Einwirkung des Druckunterschiedes in kontrollierter Weise zusammengedrückt wird.

12. Verfahren nach Anspruch 11, dadurch gekennzeichnet, daß beim Entleeren die Volumenverringerung des Innenbehälters (42) an einem Endbereich desselben beginnend sich in Richtung auf das andere Ende fortsetzt.

13. Verfahren nach Anspruch 12, dadurch gekennzeichnet, daß bei Vorhandensein eines Tauchrohres (76) in der Verpackung (38) der Innenbehälter (42) unter der Einwirkung des Druckunterschiedes von oben nach unten zusammengedrückt wird, so daß das Füllgut in den unteren Bereich des Innenbehälters verdrängt wird.

14. Mit einer verschließbaren Öffnung versehene, im Koextrusions-Blasverfahren hergestellte Verpackung (38), die mit einen im wesentlichen formsteifen Außenbehälter (40) versehen ist, innerhalb dessen in das Füllgut aufnehmender Behälter (42) aus flexiblem Material angeordnet ist, wobei Außenbehälter (40) und Innenbehälter (42) aus unterschiedlichen thermoplastischen Kunststoffen bestehen, die miteinander keine Verbindung eingehen, und der Innenbehälter (42) an seinem bodenseitigen Ende durch eine Schweißnaht dicht verschlossen ist, dadurch gekennzeichnet, daß der Außenbehälter (40) an seinem bodenseitigen Ende wenigstens eine Öffnung (57) aufweist, die durch zwei einander gegenüberliegende Wandbereiche (44, 46) derart begrenzt ist, daß der Bereich zwischen Außenbehälter (40) und plastisch verformbarem, beutelartigem Innenbehälter (42) mit der Umgebungsatmosphäre verbindbar ist derart, daß der Druck der umgebenden Atmosphäre auf dem Innenbehälter (42) permanent einwirkt.

15. Verpackung nach Anspruch 1, dadurch gekennzeichnet, daß die Öffnung am Außenbehälter, durch die der Bereich (58) zwischen Außenbehälter (40) und Innenbehälter (42) mit der Umgebungsatmosphäre verbunden ist, sich am Boden (52) des Außenbehälters (40) befindet und durch Abquetschen von überschüssigem Material (24) hergestellt ist.

16. Verpackung nach Anspruch 13, dadurch gekennzeichnet, daß der Innenbehälter (42) aus wenigstens zwei Schichten unterschiedlichen Materials besteht, die miteinander fest haftend verbunden sind.

17. Verpackung nach Anspruch 14, dadurch gekennzeichnet, daß die Verpackung (38) eine flaschenförmige Gestalt aufweist und der Innenbehälter (42) im Bereich des Flaschenhalses (68) am Außenbehälter (40) verankert ist.

18. Verpackung nach Anspruch 14, dadurch gekennzeichnet, daß der Innenbehälter (42) im Bereich des Flaschenhalses (68) mit wenigstens einer über wenigstens einen Teilbereich der Länge des Flaschenhalses verlaufenden Schweißnaht versehen ist und der Flaschenhals des äußeren Behälters (40) im wesentlichen parallel zu seiner Längsachse unterteilt ist und beide Teile des Halses des Außenbehälters (40) Bereiche des Halses des Innenbehälters unter der Einwirkung einer den Flaschenhals außenseitig umgebenden Bandage einklemmen.

19. Verpackung nach Anspruch 18, dadurch gekennzeichnet, daß die Bandage durch ein auf das Außengewinde (66) am Flaschenhals (68) des äußeren Behälters (40) aufschraubbares Teil (74) gebildet ist.

20. Verpackung nach Anspruch 14, dadurch gekennzeichnet, daß Außenbehälter (40) und Innenbehälter (42) mit wenigstens einer umlaufenden nutartige Vertiefung und/oder wenigstens einem umlaufenden wulstartigen Vorsprung (69) versehen sind und Vertiefung bzw. Vorsprung von Innenbehälter (42) und Außenbehälter (40) einen Formschluß zwischen beiden Behältern bewirken.

21. Verpackung nach Anspruch 14, dadurch gekennzeichnet, daß der freie Endbereich des Flaschenhalses (68) des inneren Behälters (42) nach außen über die stirnseitige Begrenzung (70) des Flaschenhalses (68) des äußeren Behälters (40) umgebogen ist.

22. Verpackung nach Anspruch 14, dadurch gekennzeichnet, daß durch entsprechende Verteilung der Wanddicke des Innenbehälters (42) dieser beim Entleerungsvorgang unter der Einwirkung des Druckunterschiedes in vorherbestimmter Weise zusammengedrückt wird.

23. Verpackung nach Anspruch 14, dadurch gekennzeichnet, daß sie mit einem Tauchrohr (76) versehen ist, welches sich bis nahe dem bodenseitigen Ende des Innenbehälters (42) erstreckt.

24. Verpackung nach Anspruch 23, dadurch gekennzeichnet, daß das Tauchrohr (76) in einem Abstand von seiner bodenseitigen Öffnung (78) mit wenigstens einer zusätzlichen Öffnung (88) versehen ist.

25. Verpackung nach Anspruch 14, dadurch gekennzeichnet, daß sie an ihrer Entleerungsöffnung mit einer Pumpe (74) versehen ist, durch die der Druck innerhalb des inneren Behälters (42) reduziert werden kann.

**Revendications**

1. Procédé pour fabriquer un emballage (38) pourvu d'une ouverture pouvant être refermée, cet emballage comportant un récipient externe (40) de forme sensiblement rigide et dans lequel est disposé un récipient interne (42) en matière souple, qui est destiné à contenir un produit ainsi conditionné, ce procédé consistant à réaliser d'abord par coextrusion une ébauche (16), qui comporte deux parties tubulaires sensiblement coaxiales (18, 20), en matières thermoplastiques de natures différentes et qui ne tendent pas à adhérer l'une à l'autre, puis à poursuivre l'extrusion de cette ébauche jusqu'à lui donner la longueur nécessaire, après quoi on réalise l'expansion de l'ébauche dans un moule de soufflage (12) en lui appliquant une surpression interne, jusqu'à mettre en appui la partie externe (18) de l'ébauche contre la paroi du moule de soufflage (12), et on met en forme le fond (52) de l'emballage (38) en sectionnant par écrasement la matière en excès en cet endroit (24), en pratiquant en même temps un joint soudé (51) sur le récipient interne (42), procédé caractérisé en ce qu'on sectionne par écrasement la matière en excès (24) de l'ébauche sans réaliser sur le fond du récipient externe (40) un joint soudé qui obture complètement ce fond, de manière à laisser subsister une ouverture (57) assez grande sur le récipient externe (40), pour mettre en communication l'atmosphère extérieure et la région comprise entre le récipient externe (40) et le récipient interne (42), analogue à un sac et facilement déformable, afin de laisser la pression atmosphérique ambiante agir en permanence sur le récipient interne (42).

2. Procédé selon la revendication 1, caractérisé en ce que, après la fin des opérations de mise en forme du récipient externe (40) et lorsque la matière constitutive de celui-ci est suffisamment solidifiée, on exerce sur le fond (52) de ce récipient externe un effort approprié, pour créer un écartement entre les deux parties opposées (44, 46) du fond du récipient externe (40), dans la zone où s'est effectué le sectionnement par écrasement de la matière en excès.

3. Procédé selon la revendication 2, caractérisé en ce qu'on exerce l'effort d'écartement sur le fond (52) du récipient externe (40), alors que l'emballage (38) se trouve encore à l'intérieur du moule de soufflage (12).

4. Procédé selon la revendication 2, caractérisé en ce que l'effort exercé sur le fond (52) du récipient externe (40) est provoqué par l'application d'une surpression à l'intérieur de l'emballage (38).

5. Procédé selon la revendication 2, caractérisé en ce qu'on applique l'effort sur le fond (52) du récipient externe (40) à un moment où ce récipient est encore un peu déformable par plasticité.

6. Procédé selon la revendication 1, caractérisé en ce que la partie interne (20) de l'ébauche (16) du récipient interne (42) est réalisée par coextrusion de plusieurs couches de matières différentes, qui sont soudées ensemble pour constituer un récipient unitaire.

7. Procédé selon la revendication 1, caractérisé en ce qu'on donne à l'emballage (38) la forme d'un flacon, et en ce qu'on assure l'ancrage du récipient interne (42) sur le récipient externe dans la région du col (68) du flacon.

8. Emballage selon la revendication 7, caractérisé en ce que, pour obtenir une liaison géométriquement verrouillée entre le récipient externe (40) et le récipient interne (42) dans la région du col (68) du flacon, on prévoit sur le col au moins une gorge annulaire qui fait de préférence le tour du col, et/ou au moins un bourrelet en saillie (69) qui fait de préférence le tour du col.

9. Procédé selon la revendication 7, caractérisé en ce que le diamètre extérieur de l'ébauche tubulaire (16), au moins sur une partie de l'étendue du col (68) à réaliser sur l'emballage (38), est supérieur au diamètre de la région correspondante du moule de soufflage (12), et en ce qu'on sectionne par écrasement la matière en excès de l'ébauche (16) en fermant le moule de soufflage (12) tout en réalisant au moins un joint soudé sur la partie interne (20) de l'ébauche, mais sans réaliser en même temps aucun joint soudé sur la partie externe (18) de l'ébauche.

10. Procédé selon la revendication 1, caractérisé en ce que, en effectuant la mise en forme de l'emballage (38), on rabat vers l'extérieur la partie terminale de l'ébauche tubulaire interne (20), sur la face terminale (70) du récipient externe (40).

11. Procédé selon la revendication 1, caractérisé en ce qu'on prévoit une répartition judicieuse de l'épaisseur de la paroi du récipient interne (42), pour assurer d'une manière contrôlée l'écrasement de ce récipient interne sous l'effet de la différence des pressions en jeu, lorsqu'on vide ce récipient.

12. Procédé selon la revendication 11, caractérisé en ce que, pour se vider, le récipient interne (42) commence à diminuer de volume à l'une de ses extrémités, cette diminution de volume se propageant ensuite vers l'autre extrémité du récipient.

13. Procédé selon la revendication 12, caractérisé en ce qu'on prévoit dans l'emballage (38) un tube-plongeur (76), pour assurer l'écrasement progressif du récipient interne (42) sous l'effet de la différence de pression, si bien que le produit contenu dans le récipient interne (42) se trouve refoulé dans la partie inférieure de ce récipient.

14. Emballage (38) réalisé par coextrusion et pourvu d'une ouverture obturable, cet emballage comportant un récipient externe (40) de forme sensiblement rigide, dans lequel est disposé un récipient interne (42) en matière souple, destiné à contenir le produit ainsi conditionné, le récipient externe (40) et le récipient interne (42) étant constitués de matières thermoplastiques différentes qui ne tendent pas à adhérer l'une à l'autre, et le récipient interne (42) étant fermé de manière étanche par un joint soudé à l'une de ses extrémités, emballage caractérisé en ce que le récipient externe (40) présente, à l'endroit de son extrémité correspondant au fond de l'emballage, au moins une ouverture (57) limitée par deux parties opposées (44, 46) de la paroi de ce récipient, pour mettre en communication l'atmosphère extérieure avec la région comprise entre le récipient externe (40) et le récipient interne (42) analogue à un sac et déformable, afin que la pression atmosphérique ambiante puisse agir en permanence sur le récipient interne (42).

15. Emballage selon la revendication 14, caractérisé en ce que l'ouverture prévue sur le récipient externe, et qui est destinée à faire communiquer l'atmosphère ambiante avec la région (58) comprise entre le récipient externe (40) et le récipient interne (42), se trouve à l'endroit du fond (52) du récipient externe (40), cette ouverture étant réalisée par écrasement et sectionnement de la matière en excès (24).

16. Emballage selon la revendication 14, caractérisé en ce que le récipient interne (42) est constitué par au moins deux couches de matières différentes, qui sont solidement fixées l'une à l'autre.

17. Emballage selon la revendication 14, caractérisé en ce que l'emballage (38) présente la forme d'un flacon, et en ce que le récipient interne (42) est ancré au récipient externe (40) dans la région du col (68) du flacon.

18. Emballage selon la revendication 14, caractérisé en ce que le récipient externe, dans la région du col (68) du flacon, comporte un joint soudé qui s'étend au moins sur une partie de la longueur du col du flacon, et en ce que le col du récipient externe (40) est divisé dans un sens à peu près parallèle à son axe longitudinal, les deux parties du col du récipient externe (40) venant serrer et emprisonner des parties correspondantes du col du récipient interne (42), sous l'action d'un collier qui entoure extérieurement le col du flacon.

19. Emballage selon la revendication 18, caractérisé en ce que le collier qui entoure le col du flacon est constitué par une pièce (74) qui se visse sur le filetage externe (66) prévu sur le col (68) du récipient externe (40).

20. Emballage selon la revendication 14, caractérisé en ce que le récipient externe (40) et le récipient interne (42) sont pourvus d'au moins une gorge en creux qui entoure chaque récipient, et/ou d'au moins un bourrelet en saillie (69) entourant chaque récipient, et en ce que la gorge en creux ou la saillie du récipient interne (42) et celle du récipient externe (40) assurent un verrouillage géométrique entre les deux récipients.

21. Emballage selon la revendication 14, caractérisé en ce que l'extrémité libre du col (68) du récipient interne (42) est rabattue vers l'extérieur, par-dessus la face terminale (70) du col (68) du récipient externe (40).

22. Emballage selon la revendication 14, caractérisé en ce que l'épaisseur de la paroi du récipient interne (42) est judicieusement répartie, pour assurer d'une manière prédéterminée l'écrasement du récipient interne (42) sous l'effet de la différence de pression, lorsqu'on vide ce récipient.

23. Emballage selon la revendication 14, caractérisé en ce qu'il comporte un tube-plongeur (76), qui s'étend presque jusqu'à l'extrémité du récipient interne (42) correspondant au fond de l'emballage.

24. Emballage selon la revendication 23, caractérisé en ce que le tube-plongeur (76) comporte au moins une ouverture supplémentaire (88), disposée à une certaine distance de son ouverture (78) située en regard du fond.

25. Emballage selon la revendication 14, caractérisé en ce qu'il comporte, à l'endroit de son ouverture de vidange, une pompe (74) qui permet de réduire la pression dans le récipient interne (42).

**Claims**

1. A process for the production of a packaging (38) which is provided with a closable opening and which is provided with an outer container (40) which is substantially stiff in respect of shape and within which is disposed a container (42) of flexible material for accommodating the filling material, wherein a preform (16) comprising two substantially coaxial tubular portions (18, 20) is firstly extruded in a co-extrusion process and the simultaneously extruded portions (18, 20) comprise different thermoplastic materials which do not become joined together and after reaching the required length in a blowing mould (12), are expanded by the application of an internal increased pressure until the outer portion (18) bears against the wall of the blowing mould (12) and the bottom (52) of the packaging (38) is formed with excess material (24) being squeezed off with the simultaneous formation of a welded seam (51) on the inner container (42), characterised in that the operation of squeezing off excess material (24) is effected without the simultaneous formation on the outer container (40) of a welded seam which would close off the outer container (40) so that there is a sufficiently large opening (57) in the outer container (40) through which the region between the outer container (40) and the easily deformable, bag-like inner container (42) is communicated with the ambient atmosphere in order for the pressure of the ambient atmosphere to act permanently on the inner container (42).

2. A process according to claim 1 characterised in that, after the termination of the shaping operation and after the material forming the outer container (40) has sufficiently set, a force is caused to act on the bottom (52) thereof, which produces a spacing between the wall portions (44, 46) of the bottom of the outer container (40), which are in opposite relationship in the squeezing-off region.

3. A process according to claim 2 characterised in that the force is applied to the bottom (52) of the outer container (40) when the packaging (38) is still within the blowing mould (12).

4. A process according to claim 2 characterised in that the force is caused to act on the bottom (52) of the outer container (40) by an increased pressure taking effect within the packaging (38).

5. A process according to claim 2 characterised in that the force is caused to act on the bottom (52) of the outer container (40) at a time at which the outer container is still plastically deformable to a certain extent.

6. A process according to claim 1 characterised in that the inner portion (20) of the preform (16) for producing the inner container (42) is produced by the co-extrusion of a plurality of layers of different materials, which are welded to form a unit.

7. A process according to claim 1 characterised in that the packaging (38) is of a bottle-like configuration and the inner container (42) is anchored to the outer container in the region of the neck (68) of the bottle.

8. A process according to claim 7 characterised in that, to produce a positive connection between the outer container (40) and the inner container (42) in the region of the neck (68) of the bottle, the neck is provided with at least one groove-like depression which preferably extends therearound and/or at least one bead-like projection (69) which preferably extends therearound.

9. A process according to claim 7 characterised in that the outside diameter of the tubular preform (16) is larger, at least in a portion of the neck (68) to be produced on the packaging (38), than the outside diameter of the associated region of the blowing mould (12) and when the blowing mould is closed excess material is squeezed off the preform (16) with the simultaneous formation of at least one welded seam on the inner portion (20), without a welded seam being produced on the outer portion (18) at the same time.

10. A process according to claim 1 characterised in that, in the operation of shaping the packaging (38), the end region of the inner tubular preform (20) is bent outwardly over the end (70) of the outer container (40).

11. A process according to claim 1 characterised in that suitable distribution of the wall thickness of the inner container (42) provides that the inner container is compressed in a controlled manner in the emptying operation under the effect of the pressure difference.

12. A process according to claim 11 characterised in that in the emptying operation the reduction in volume of the inner container (42), which begins at an end region thereof, progresses in a direction towards the other end.

13. A process according to claim 12 characterised in that, when there is a dip tube (76) in the packaging (38), the inner container (42) is compressed under the effect of the pressure difference from above downwardly so that the filling material is displaced into the lower region of the inner container.

14. A packaging (38) which is provided with a closable opening and which is produced by a co-extrusion blow moulding process and which is provided with an outer container (40) which is substantially rigid in respect of shape and within which is arranged a container (42) of flexible material for accommodating the filling material, wherein the outer container (40) and the inner container (42) comprise different thermoplastic materials which do not become joined together and the inner container (42) is sealingly closed by a welded seam at its bottom end, characterised in that at its bottom end the outer container (40) has at least one opening (57) which is defined by two mutually oppositely disposed wall regions (44, 46) in such a way that the region between the outer container (40) and the plastically deformable bag-like inner container (42) can be communicated with the ambient atmosphere in such a way that the pressure of the surrounding atmosphere acts permanently on the inner container (42).

15. A packaging according to claim 14 characterised in that the opening on the outer container through which the region (58) between the outer container (40) and the inner container (42) is communicated with the ambient atmosphere is disposed at the bottom (52) of the outer container (40) and is produced by excess material (24) being squeezed off.

16. A packaging according to claim 14 characterised in that the inner container (42) comprises at least two layers of different materials, which are firmly bonded together.

17. A packaging according to claim 14 characterised in that the packaging (38) is of a bottle-like configuration and the inner container (42) is anchored to the outer container (40) in the region of the neck (68) of the bottle.

18. A packaging according to claim 14 characterised in that in the region of the neck (68) of the bottle the inner container (42) is provided with at least one welded seam which extends over at least a portion of the length of the neck of the bottle and the bottle neck of the outer container (40) is divided substantially parallel to its longitudinal axis and both parts of the neck of the outer container (40) clamp regions of the neck of the inner container under the effect of a banding means which extends around the neck of the bottle on the outside thereof.

19. A packaging according to claim 18 characterised in that the banding means is formed by a member (74) which can be screwed on to the external screwthread (66) on the bottleneck (68) of the outer container (40).

20. A packaging according to claim 14 characterised in that the outer container (40) and the inner container (42) are provided with at least one groove-like depression extending therearound and/or at least one bead-like projection (69) extending therearound, and the depression and projection on the inner container (42) and the outer container (40) provide a positive connection between the two containers.

21. A packaging according to claim 14 characterised in that the free end region of the bottleneck (68) of the inner container (42) is bent outwardly over the end (70) of the bottleneck (68) of the outer container (40).

22. A packaging according to claim 14 characterised in that suitable distribution of the wall thickness of the inner container (42) provides that in the emptying operation the inner container is compressed in a predetermined fashion under the effect of the pressure difference.

23. A packaging according to claim 14 characterised in that it is provided with a dip tube (76) which extends to close to the bottom end of the inner container (42).

24. A packaging according to claim 23 characterised in that the dip tube (76) is provided with at least one additional opening (88) at a spacing from its bottom opening (78).

25. A packaging according to claim 14 characterised in that it is provided at its emptying opening with a pump (74) by means of which the pressure within the inner container (42) can be reduced.

FIG.1

FIG.2

FIG.3

FIG.4

FIG.5

FIG.6

FIG.7

52  56

FIG.8

64b  57  IX

44

46

IX

64a

FIG.9

58

64a  44  57  46  64b

72

70

FIG.10

66

68

118  120

69

40  42

FIG.11

FIG.12

FIG.13